# EUROPEAN PATENT SPECIFICATION

(11) **EP 1 795 395 B1**
(45) Date of publication and mention of the grant of the patent: **08.05.2013**
(21) Application number: 04791990.7
(22) Date of filing: 01.10.2004
(51) Int. Cl.: B60R 1/06

(54) **RETRACTABLE DOOR MIRROR**
EINZIEHBARER TÜRSPIEGEL
RETROVISEUR DE PORTE RETRACTABLE

(43) Date of publication of application: 13.06.2007
(73) Proprietor: Murakami Corporation, Shizuoka-shi, Shizuoka, 422-8569 (JP)
(72) Inventor: YAMAUCHI, Kazunari, c/o MURAKAMI CORPORATION, Fujieda-shi, Shizuoka 426-8601 (JP)
(74) Representative: von Kreisler Selting Werner
(86) International application number: PCT/JP2004/014523
(87) International publication number: WO 2006/038275

(56) References cited:
- DE-A1- 4 023 375
- FR-A1- 2 667 030
- JP-A- 9 099 780
- JP-A- 2004 082 953
- JP-U- 59 088 341
- JP-U- 62 145 746

## Description

### Technical Field

The present invention relates to a retractable door mirror to be attached, for example, to a door of an automobile or the like. Japanese Patent application JP 09099780 discloses a retractable door mirror according to the preamble of claim 1.

### Background Art

Door mirrors are attached to door parts of automobiles, and many door mirrors of this type are of a retractable type in recent years. A door mirror has, for example, a mirror base fixed to an exterior side plate of a vehicle, and a mirror body mounted on the mirror base. The mirror body is arranged to be retractable relative to the mirror base and is configured so that it falls backward from a neutral position in a use state to retract the mirror and so that it falls forward or backward to absorb an external force exerted on the mirror body, so as to secure safety for pedestrians and others and prevent breakage of the door mirror.

A conventional door mirror of this type is, for example, the one disclosed in Japanese Patent Application Laid-Open No. 2001-334874. This door mirror is constructed as follows: a shaft stands on an upper surface of a projecting portion of the mirror base and a frame for supporting the mirror body is rotatably engaged with the shaft. For making this shaft stand, a stopper plate with projections (stoppers) is interposed between the shaft and the mirror base. The stoppers in this stopper plate regulate retractable angles of the mirror body in the forward and backward directions.
Patent Document 1: Japanese Patent Application Laid-Open No. 2001-334874

### Disclosure of the Invention

### Problem to be Solved by the Invention

In the door mirror disclosed in Patent Document 1 above, however, the stopper plate is mounted on the mirror base. Since the stopper plate is arranged to adjust the retractable angles of the mirror body by contact with the mirror body, the stopper plate is required to have some stiffness. For a reason of molding of resin, the mirror base has reducing thickness portion formed on the upper side, and this thinned portion causes wind noise. In order to improve stiffness and prevent wind noise as described above, the stopper plate is mounted in the thinned portion on the upper side on the mirror base to cancel a level difference on the mirror base. In this case, however, the shape of the stopper plate needs to be matched with the thinned portion on the mirror base and the shape becomes complicated.

For satisfying the condition for mounting the stopper plate (base plate) on the mirror base, as described above, the base plate is required to have some stiffness and complicated shape, and it thus becomes necessary to make the base plate by die-casting or through complex steps. Production of the stopper plate by die-casting involved a problem of a rise in production cost.

An object of the present invention is to provide a retractable door mirror capable of preventing wind noise during running of an automobile and achieving a simplified form of a base plate having a function as a stopper for regulating a retractable angle of a mirror body, thereby reducing production cost.

### Means for Achieving the Object

A retractable door mirror according to the present invention, which achieved the above object, is one comprising: a mirror base to be fixed to a vehicle; a mirror body mounted on the mirror base and adapted to rotate approximately about a vertical axis and in a longitudinal direction of the vehicle; and a base plate in which a stopper for regulating a retractable angle of the mirror body is attached to a plate body, wherein the plate body in the base plate is located on a lower side of the mirror base, and wherein the stopper is arranged to penetrate the mirror base from the lower side of the mirror base and project to an upper side of the mirror base.

The retractable door mirror according to the present invention has the base plate in which the stopper for regulating the retractable angle of the mirror body is attached to the plate body. This plate body is located on the lower side of the mirror base and the stopper is arranged to penetrate the mirror base and project to the upper side of the mirror base. For this reason, the base plate except for the stopper part is located on the lower side of the mirror base and there is no need for adopting a complicated shape for preventing wind noise during running of the automobile. Therefore, it becomes feasible to produce the base plate, for example, by press molding or the like, while preventing production of wind noise, and this contributes to reduction of production cost.

The door mirror can be constructed in the following configuration: the lower side of the mirror base is thinned, the plate body in the base plate is located in reducing thickness portion of the mirror base, and the thinned portion is covered by a lower cover.

The lower side of the mirror base is thinned and the provision of the thinned portion makes it easy to secure a region for placement of the plate body of the base plate. Since the thinned portion is covered by the lower cover, it is feasible to keep the appearance good and to prevent production of wind noise.

The door mirror can also be constructed in the following configuration: the plate body in the base plate is attached in close contact to the mirror base.

When the plate body is attached in close contact to the mirror base as in this configuration, the stopper is able to securely regulate the retractable angle of the mirror body.

### Effect of the Invention

The retractable door mirror according to the present invention prevents the wind noise during running of the automobile and achieves the simplified shape of the base plate having the function as the stopper for regulating the retractable angle of the mirror body, thereby reducing production cost.

### Brief Description of the Drawings

Fig. 1 is a perspective view of major part of a retractable door mirror according to the present invention.
Fig. 2 is a perspective view of major part of the retractable door mirror viewed from bottom.
Fig. 3 is a plan view of major part of the retractable door mirror.

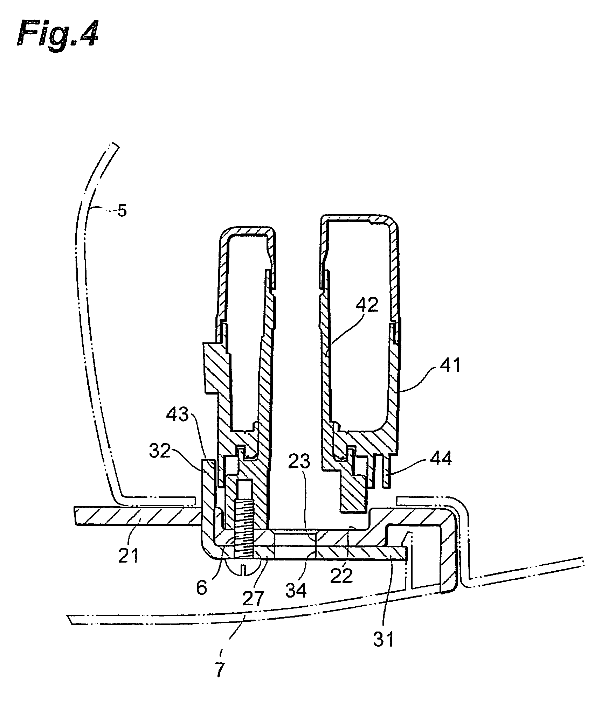

Fig. 4 is a sectional side view of the retractable door mirror.
Fig. 5 includes (a) a schematic plan view of the retractable door mirror at a rearmost position, and (b) a schematic plan view of the retractable door mirror at a frontmost position.

### Description of Reference Symbols

1 retractable door mirror; 2 mirror base; 3 base plate; 4 frame; 5 mirror body; 7 lower cover; 21 base body; 27 thinned portion; 31 plate body; 32 front stopper; 33 rear stopper; 41 frame body; 42 shaft.

### Best Mode for Carrying out the Invention

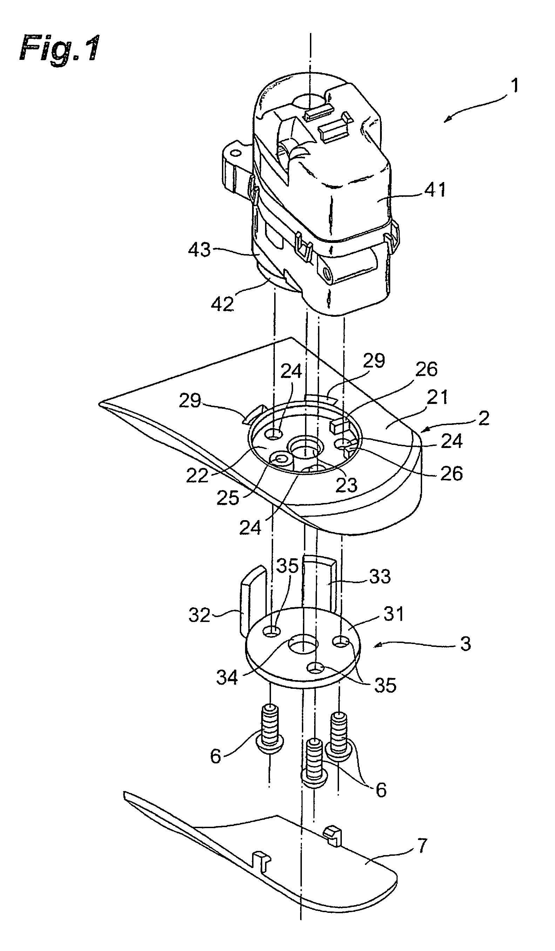

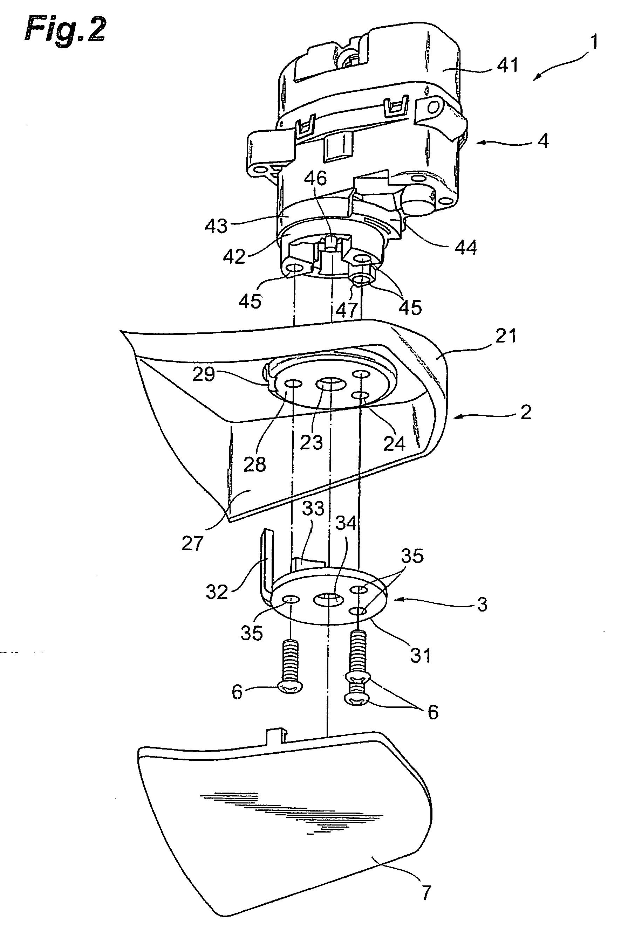

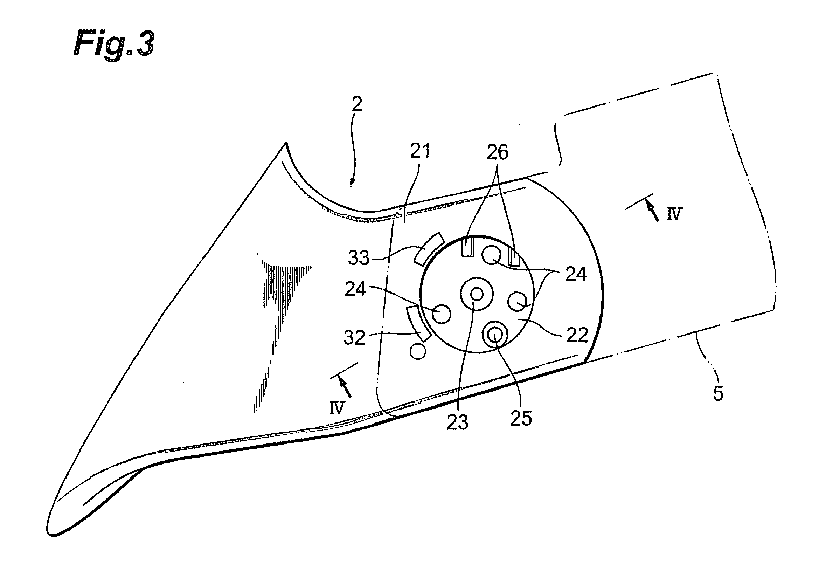

An embodiment of the present invention will be described below with reference to the drawings. Fig. 1 is a perspective view of major part of a retractable door mirror according to the present invention, Fig. 2 a perspective view of major part of the retractable door mirror viewed from bottom, and Fig. 3 a plan view of major part of the retractable door mirror.

As shown in Figs. 1 and 2, the retractable door mirror 1 according to the present embodiment is a so-called manual door mirror and has a mirror base 2 of resin, a base plate 3 of metal, and a frame 4. A mirror body 5 of resin, which is indicated by imaginary lines in Fig. 3, is attached to the frame 4. The mirror body 5 is arranged to rotate (retract) approximately about the vertical axis and in a longitudinal direction of a vehicle.

The mirror base 2 is provided with a base body 21 fixed to a side surface of a door in the vehicle not shown. A recess 22, which has an approximately circular shape on its plan view, is formed in an upper surface of the base body 21. A harness-penetrating through hole 23 for penetration of a wiring harness not shown is formed in a central region of the recess 22, and three screw through holes 24 are formed around the harness-penetrating through hole 23. An engagement recess 25 is provided in a part around the harness-penetrating through hole 23 and between two screw through holes 24, and positioning projections 26 are provided at positions opposite to the position of the engagement recess 25 with respect to the harness-penetrating through hole 23.

The lower side of the base body 21 is thinned to form reducing thickness portion 27. A projecting portion 28 is formed as projecting at a position corresponding to the recess 22 formed on the upper side of the base body 21, and on the lower side of the base body 21. Furthermore, stopper through holes 29 of a hexagonal cross section are arranged alongside at two positions in the side part of the recess 22 in the base body 21.

The base plate 3 has a plate body 31 and two stoppers 32, 33. The plate body 31 has an approximately circular shape on its plan view, and the size thereof is approximately equal to the size of the projecting portion 28 on its plan view in the base body 21. A through hole 34 is formed in the central region of the plate body 31 and three screw through holes 35 are formed around the through hole 34.

The through hole 34 is arranged to match the harness-penetrating through hole 23 formed in the projecting portion 28, when the plate body 31 is laid on the projecting portion 28 of the base body 21. These harness-penetrating through hole 23 and through hole 34 have their respective diameters approximately equal to each other. The screw through holes 35 are formed at positions corresponding to the screw through holes 24 formed in the projecting portion 28 of the base body 21, and these screw through holes 24, 35 have their respective diameters approximately equal to each other.

The stoppers 32, 33 are attached alongside to the side surface part of the plate body 31, The sectional shape of the stoppers is much the same as that of the stopper through holes 29 formed in the base body 21, and is a shape made by curving a rectangle at a certain curvature (a shape obtained by cutting from a sector, a smaller sector region with the same angle as the sector). The stoppers 32, 33 are shaped to be longer than the thickness of the base body 21 in the mirror base 2, so as to penetrate the stopper through holes 29, whereby top parts of the stoppers 32, 33 project from the upper side of the base body 21.

The frame 4 has a frame body 41 to which the mirror body is attached. The frame body 41 is provided with a shaft 42, and the frame body 41 is rotatable around the shaft 42. The shaft 42 is of an approximately columnar shape and the diameter thereof is set to be slightly smaller than the diameter of the recess 22 formed in the base body 21. The lower end of this shaft 42 is set in the recess 22.

A columnar portion 43 is provided in the lower part of the frame body 41. The columnar portion 43 is arranged above the recess 22 formed in the base body 21 and the outside diameter thereof is approximately equal to the inside diameter of the recess 22.

Furthermore, a stopper abutment 44 is provided on the lower side of the frame body 41 and beside the columnar portion 43. The stopper abutment 44 is formed at such a height that it is mounted on the upper surface of the base body 21 when the lower end of the shaft 42 is set in the recess 22 of the base body 21. The stoppers 32, 33 projecting from the base body 21 are located on a rotational trajectory of the stopper abutment 44 in rotation of the frame body 41. Therefore, as the frame body 41 rotates in one direction, the stopper abutment 44 comes to butt either one of the stoppers 32, 33 at some future time.

Furthermore, screw holes 45 and boss 46 are provided at the lower end of the shaft 42 in the frame 4. The screw holes 45 are threaded and are formed at positions corresponding to the positions where the screw through holes 24 are formed in the base body 21. The boss 46 is provided at a position corresponding to the engagement recess 25 in the base body 21. The outside diameter of the boss 46 is approximately the same as the inside diameter of the engagement recess 25 and the boss 46 is arranged to be engageable with the engagement recess 25.

A positioning projection 47 is provided at a position in the columnar portion 43 corresponding to the positions where the projections 26 of the base body 21 are formed, and one of the screw holes 45 is formed in this projection 47. These boss 46 and projection 47 are so arranged that the boss 46 is engaged with the engagement recess 25 and that the projection 47 is engaged with the projections 26, whereby the frame 4, eventually the mirror body 5, is positioned relative to the mirror base 2.

Screws 6 are inserted from the lower side of the base body 21 into the respective screw through holes 35 formed in the plate body 31 and into the respective screw through holes 24 formed in the base body 21, and the screws 6 penetrate the respective screw through holes 24, 35. The threaded portions of these screws 6 are screwed into the corresponding screw holes 45 formed in the frame body 41.

A lower cover 7 is attached to the lower side of the base body 21 so as to cover the thinned portion 27 formed on the lower side of the base body 21. The lower cover 7 is made, for example, of resin, and, when the lower cover 7 is attached to the lower side of the base body 21, the lower cover 7 covers over the tops of screws 6 on the lower side of the base body 21 and the plate body 31 of the base plate 3 so that they cannot be visually recognized from the outside.

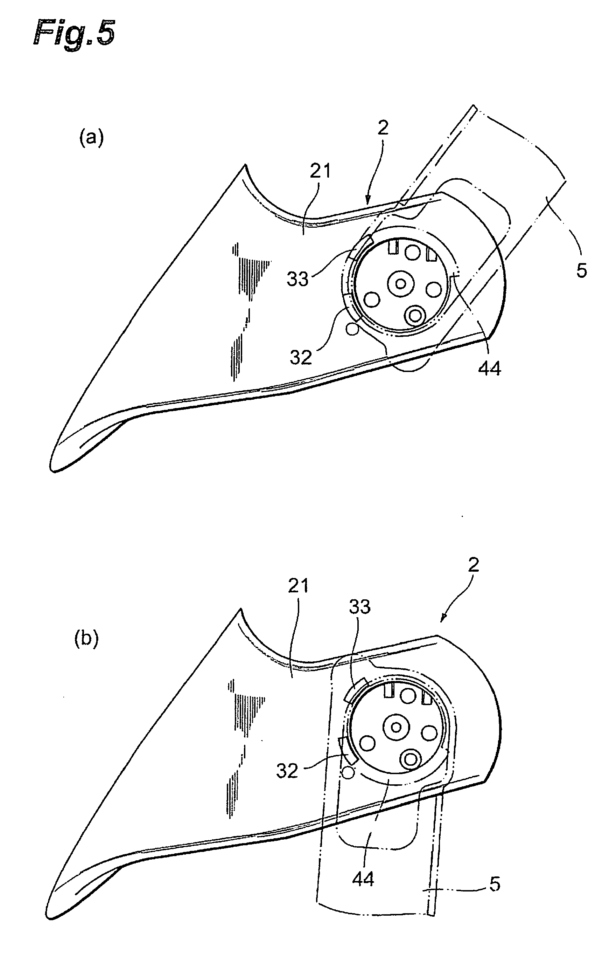

In the retractable door mirror 1 of the present embodiment having the above-described configuration, the mirror body 5 rotates as the frame body 41 rotates around the shaft 42 in the frame 4. As the mirror body 5 rotates backward, as shown in Fig. 5 (a), one end face of the stopper abutment 44 comes to butt the rear stopper 33 at some future time to regulate further rotation of the mirror body 5.

Conversely, as the mirror body 5 rotates forward, as shown in Fig. 5 (b), the other end face of the stopper abutment 44 comes to butt the front stopper 32 to regulate further rotation of the mirror body 5. In this manner, the range of rotation of the mirror body 5 is regulated by the stoppers 32, 33 in the base plate 3 attached to the mirror base 2, and by the stopper abutment 44 attached to the frame 4.

For regulating rotation of the mirror body 5, the base plate 3 with the stoppers 32, 33 used in the retractable door mirror 1 of the present embodiment is so arranged that the plate body 31 is located on the lower side of the base body 21 in the mirror base 2. For this reason, only the tips of the stoppers 32, 33 project out above the mirror base 2, and the shape thereof is simple, without causing wind noise during running of the automobile.

Since the shape of the base plate 3 is simple as described above, the base plate 3 can be produced by press molding. Therefore, since the base plate 3 does not have to be produced by die-casting, it contributes to cost reduction in production of the base plate 3. In addition, it is also feasible to prevent wind noise during running of the automobile.

The preferred embodiment of the present invention was described above, but it is noted that the present invention is by no means limited to the above embodiment. For example, the above embodiment concerned the manual door mirror, but the door mirror according to the present invention can also be applied to an electric motor-driven type.

## Claims

1. A retractable door mirror (1) comprising:
a mirror base (2) to be fixed to a vehicle;
a mirror body (5) mounted on the mirror base (2) and adapted to rotate approximately about a vertical axis and in a longitudinal direction of the vehicle; and
a base plate (3) in which a stopper (32,33) for regulating a retractable angle of the mirror body (5) is attached to a plate body (31),
**characterized in that** the mirror body (5) is attached to a frame body (41) of a frame (4), wherein the frame body (41) is provided with a shaft (42) and the frame body (41) is rotatable around the shaft (42), wherein the plate body (31) in the base plate (3) is located on a lower side of the mirror base (2), and the stopper (32,33) is arranged to penetrate the mirror base (2) from the lower side of the mirror base (2) and project to an upper side of the mirror base (2) and wherein the shaft (42) is fastened to the mirror base (2).

2. A retractable door mirror (1) according to claim 1, wherein the lower side of the mirror base (2) is thinned,
wherein the plate body (31) in the base plate (3) is located in reducing thickness portion (27) of the mirror base (2), and
wherein the thinned portion (27) is covered by a lower cover (7).

3. A retractable door mirror (1) according to claim 1 or claim 2,
wherein the plate body (31) in the base plate (3) is attached in close contact to the mirror base (2).

## Patentansprüche

1. Einziehbarer Türspiegel (1) mit:
einer Spiegelbasis (2) zum Anbringen an einem Kraftfahrzeug;
einem Spiegelkörper (5), der an der Spiegelbasis (2) befestigt ist und in der Lage ist, annähernd um eine vertikale Achse und in Längsrichtung des Fahrzeugs zu drehen; und
einer Basisplatte (3), bei welcher ein Anschlag (32, 33) zum Regulieren des Einzugswinkels des Spiegelkörpers (5) an einem Plattenkörper (31) angebracht ist,
**dadurch gekennzeichnet, dass** der Spiegelkörper (5) an einem Rahmenkörper (41) eines Rahmens (4) befestigt ist, wobei der Rahmenkörper (41) mit einer Welle (42) versehen ist, und der Rahmenkörper (41) um die Welle (42) herum drehbar ist, wobei der Plattenkörper (31) in der Basisplatte (3) auf einer Unterseite der Spiegelbasis (2) angeordnet ist, und der Anschlag (32, 33) ist derart angeordnet, dass er von der Unterseite der Spiegelbasis (2) her durch die Spiegelbasis (2) hindurchtritt und an der Oberseite der Spiegelbasis (2) herausragt, und wobei die Welle (42) an der Spiegelbasis (2) befestigt ist.

2. Einziehbarer Türspiegel (1) nach Anspruch 1, bei welchem die Unterseite der Spiegelbasis (2) verdünnt ist,
wobei der Plattenkörper (31) in der Basisplatte (3) in einem Bereich (27) verringerter Dicke der Spiegelbasis (2) angeordnet ist, und
wobei der verdünnte Bereich (27) von einer unteren Abdeckung (7) bedeckt ist.

3. Einziehbarer Türspiegel (1) nach Anspruch 1 oder Anspruch 2, wobei der Plattenkörper (31) in der Basisplatte (3) in enger Anlage an der Spiegelbasis (2) angebracht ist.

## Revendications

1. Rétroviseur de porte rétractable (1) comportant :
une base de rétroviseur (2) à fixer sur un véhicule;
un corps de rétroviseur (5) monté sur la base de rétroviseur (2) et adapté pour tourner de façon approximative autour d'un axe vertical et suivant une direction longitudinale du véhicule ; et
une plaque de base (3) dans laquelle un butoir (32, 33) permettant de régler une inclinaison rétractable du corps de rétroviseur (5) est fixé au corps de la plaque (31), **caractérisé en ce que** le corps de rétroviseur (5) est fixé au corps (41) d'une structure (4), dans lequel le corps (41) de la structure est pourvu d'un axe (42) et le corps de structure (41) peut tourner autour de l'axe (42), dans lequel le corps de plaque (31) de la plaque de base (3) est placé sur un côté inférieur de la base du rétroviseur (2), et le butoir (32, 33) est agencé en vue de pénétrer dans la base du rétroviseur (2) à partir du côté inférieur de la base du rétroviseur (2) et de s'avancer vers un côté supérieur de la base du rétroviseur (2) et dans lequel l'axe (42) est fixé sur la base du rétroviseur (2).

2. Rétroviseur de porte rétractable (1) selon la revendication 1, dans lequel le côté inférieur de la base du rétroviseur (2) est aminci, dans lequel le corps de plaque (31) de la plaque de base (3) est placé dans une partie à épaisseur réduite (27) de la base du rétroviseur (2), et dans lequel la partie amincie (27) est recouverte par un couvercle inférieur (7).

3. Rétroviseur de porte rétractable (1) selon la revendication 1 ou la revendication 2, dans lequel le corps de plaque (31) de la plaque de base (3) est fixé en contact étroit avec la base du rétroviseur (2).
